# EUROPEAN PATENT APPLICATION

(11) **EP 4 528 861 A1**
(43) Date of publication of application: **26.03.2025**
(21) Application number: 24188227.3
(22) Date of filing: 12.07.2024
(51) Int. Cl.: H01M 8/04029, H01M 8/04119, H01M 8/04223

(54) **FUEL CELL SYSTEM AND WATER DRAINING METHOD OF FUEL CELL SYSTEM**

(30) Priority: 19.09.2023 JP 2023151623
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: KUZE, Tatsuya, Kawasaki-shi, Kanagawa (JP)
(74) Representative: Hoffmann Eitle

(57) **Abstract**

A fuel cell system of an embodiment includes a fuel cell stack including a fuel electrode layer, an oxidizer electrode layer, and a cooling layer, a fuel-gas flow path configured to allow the fuel gas from the fuel electrode layer to pass therethrough, an oxygen-containing-gas flow path configured to allow the oxygen-containing gas from the oxidizer electrode layer to pass therethrough, a cooling-water flow path, a first bypass pipe configured to guide water in the fuel-gas flow path to the cooling-water flow path, a second bypass pipe configured to guide water in the oxygen-containing-gas flow path to the cooling-water flow path, and a suction pump provided in the cooling-water flow path on the downstream side of a connecting portion between the cooling-water flow path and the first bypass pipe and a connecting portion between the cooling-water flow path and the second bypass pipe.

## Description

### FIELD

The embodiments of the present invention relate to a fuel cell system and a water draining method of the fuel cell system.

### BACKGROUND

In a fuel cell stack including a fuel electrode layer, an electrolyte layer, an oxidizer electrode layer, and a separator stacked in layers, power generation is made by electrochemical reaction between hydrogen contained in a fuel gas supplied to the fuel electrode layer and oxygen contained in an oxygen-containing gas supplied to the oxidizer electrode layer, and water is also produced at the oxidizer electrode layer. The water produced at the oxidizer electrode layer reaches the fuel electrode layer via the electrolyte layer. A part of the water produced in the fuel cell stack is discharged to outside through discharge system piping, and the remaining part may remain in the fuel cell stack and in the discharge system piping. When power generation of a fuel cell system is stopped in an environment where the outside air temperature is low, there is a risk that the water remaining in the fuel cell stack and in the discharge system piping freezes. When the water remaining in the fuel cell stack and in the discharge system piping freezes, the fuel cell system does not operate normally in some cases because of the influences of freezing of various portions even after the fuel cell system is restarted. Therefore, in a case where it is expected that the outside air temperature becomes low after stop of power generation of the fuel cell system, it is desired to discharge the water remaining in the fuel cell stack and in the discharge system piping to outside.

Conventionally, a method has sometimes been adopted which, in a case where it is expected that the outside air temperature becomes low after stop of power generation of the fuel cell system, ejects the oxygen-containing gas by an air compressor supplying the oxygen-containing gas to the oxidizer electrode layer to blow out the water remaining in the fuel cell stack and in the discharge system piping to outside.

However, this method of discharging the water remaining in the fuel cell stack and in the discharge system piping to outside with the exhaust pressure of the air compressor has a problem that since the output of the air compressor needs to be increased in order to increase the pressure inside the fuel cell stack, power of a storage battery used as an auxiliary power source, for example, when a fuel cell is not generating power is consumed more than necessary. In addition, there are also problems that since it is necessary to cause a large amount of the oxygen-containing gas to flow into the fuel cell stack by the air compressor, the electrolyte layer is oxidized and deterioration of the electrolyte layer is promoted and that even if the oxygen-containing gas is ejected by the air compressor, there remains a possibility that the water is left in the fuel cell stack and in the discharge system piping, and therefore the influences of freezing on the fuel cell system cannot be prevented.

According to the present embodiment, there is provided a fuel cell system including: a fuel cell stack including a fuel electrode layer to which a fuel gas is supplied, an oxidizer electrode layer to which an oxygen-containing gas is supplied, and a cooling layer to which a cooling water is supplied; a fuel-gas flow path configured to allow the fuel gas from the fuel electrode layer of the fuel cell stack to pass therethrough; an oxygen-containing-gas flow path configured to allow the oxygen-containing gas from the oxidizer electrode layer of the fuel cell stack to pass therethrough; a cooling-water flow path configured to allow the cooling water from the cooling layer of the fuel cell stack to pass therethrough; a first bypass pipe configured to guide water in the fuel-gas flow path to the cooling-water flow path; a second bypass pipe configured to guide water in the oxygen-containing-gas flow path to the cooling-water flow path; and a suction pump provided in the cooling-water flow path on a downstream side of a connecting portion between the cooling-water flow path and the first bypass pipe and a connecting portion between the cooling-water flow path and the second bypass pipe.

### BRIEF DESCRIPTION OF THE DRAWINGS

FIG. 1 is an overall configuration diagram of a fuel cell system of internal humidification stack type according to a first embodiment;
FIG. 2 is a flowchart of a water draining method of the fuel cell system according to the first embodiment;
FIG. 3 is a table representing opening and closing of each shutoff valve in each control step of the water draining method of the fuel cell system according to the first embodiment;
FIG. 4A is an explanatory diagram of the water draining method of the fuel cell system according to the first embodiment and is an explanatory diagram of a first pressurizing step;
FIG. 4B is an explanatory diagram of a first draining step;
FIG. 4C is an explanatory diagram of a first suction step;
FIG. 5A is an explanatory diagram of the water draining method of the fuel cell system according to the first embodiment and is an explanatory diagram of a second pressurizing step;
FIG. 5B is an explanatory diagram of a second draining step;
FIG. 5C is an explanatory diagram of a second suction step;
FIG. 6 is an overall configuration diagram of a fuel cell system of external humidification stack type according to a second embodiment;
FIG. 7 is a flowchart of a water draining method of the fuel cell system according to the second embodiment;
FIG. 8 is a table representing opening and closing of each shutoff valve in each control step of the water draining method of the fuel cell system according to the second embodiment;
FIG. 9A is an explanatory diagram of the water draining method of the fuel cell system according to the second embodiment and is an explanatory diagram of a first pressurizing step;
FIG. 9B is an explanatory diagram of a first suction step;
FIG. 10A is an explanatory diagram of the water draining method of the fuel cell system according to the second embodiment and is an explanatory diagram of a second pressurizing step; and
FIG. 10B is an explanatory diagram of a second suction step.

### DETAILED DESCRIPTION

A fuel cell system and a water draining method of the fuel cell system according to embodiments of the present invention will now be explained below in detail with reference to the drawings. The embodiments described below are only examples of the embodiments of the present invention and are not intended to limit the scope of the present invention. In the drawings referred to in the embodiments described below, same parts or parts having identical functions are denoted by like or similar reference characters and explanations thereof may be omitted. Further, there are cases where dimensional ratios of the parts in the drawings are different from those of actual parts and some part of configurations is omitted from the drawings.

### (First embodiment)

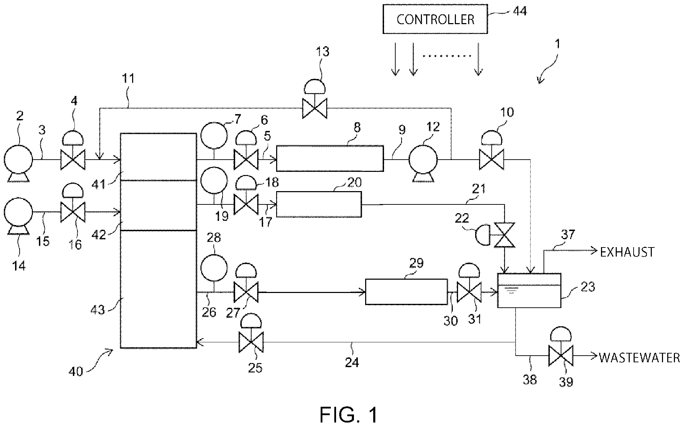

An overall configuration of a fuel cell system 1 of internal humidification stack type is described with reference to FIG. 1. The fuel cell system 1 of internal humidification stack type according to the present embodiment includes a fuel-gas supplier 2, a fuel-gas supply pipe 3, a fuel-gas supply-pipe shutoff valve 4, a first fuel-gas discharge pipe 5, a first fuel-gas discharge-pipe shutoff valve 6, a first pressure sensor 7, a separator 8, a second fuel-gas discharge pipe 9, a second fuel-gas discharge-pipe shutoff valve 10, a fuel-gas recycling pipe 11, a fuel-gas circulation pump 12, and a fuel-gas recycling-pipe shutoff valve 13. Further, the fuel cell system 1 includes an oxygen-containing-gas supplier 14, an oxygen-containing-gas supply pipe 15, an oxygen-containing-gas supply-pipe shutoff valve 16, a first oxygen-containing-gas discharge pipe 17, a first oxygen-containing-gas discharge-pipe shutoff valve 18, a second pressure sensor 19, a first heat exchanger 20, a second oxygen-containing-gas discharge pipe 21, and a second oxygen-containing-gas discharge-pipe shutoff valve 22. Furthermore, the fuel cell system 1 includes a humidification section 23, a cooling-water supply pipe 24, a cooling-water supply-pipe shutoff valve 25, a first cooling-water discharge pipe 26, a first cooling-water discharge-pipe shutoff valve 27, a third pressure sensor 28, a second heat exchanger 29, a second cooling-water discharge pipe 30, a second cooling-water discharge-pipe shutoff valve 31, a first bypass pipe 32, a first bypass-pipe shutoff valve 33, a second bypass pipe 34, a second bypass-pipe shutoff valve 35, a suction pump 36, a humidifier exhaust pipe 37, a humidifier drain pipe 38, a humidifier-drain-pipe shutoff valve 39, a fuel cell stack 40, and a controller 44.

The fuel cell stack 40 includes a fuel electrode layer 41, an oxidizer electrode layer 42, and a cooling layer 43. In the fuel cell stack 40, power generation is made by electrochemical reaction between hydrogen contained in a fuel gas supplied to the fuel electrode layer 41 and oxygen contained in an oxygen-containing gas supplied to the oxidizer electrode layer 42, and water is also produced at the oxidizer electrode layer 42. A cooling water supplied to the cooling layer 43 is used for internal humidification in the fuel electrode layer 41 and the oxidizer electrode layer 42 and is also used for recovering heat generated in power generation of the fuel cell stack 40.

The fuel-gas supplier 2 is connected to one end of the fuel-gas supply pipe 3 and supplies a fuel gas to the fuel-gas supply pipe 3. For example, the fuel-gas supplier 2 is a hydrogen tank, and the fuel gas is pure hydrogen. The fuel-gas supply pipe 3 connected to the fuel-gas supplier 2 is connected to the fuel electrode layer 41 of the fuel cell stack 40 at the other end and allows the fuel gas to pass therethrough from the fuel-gas supplier 2 toward the fuel electrode layer 41. The fuel-gas supply-pipe shutoff valve 4 is provided on the fuel-gas supply pipe 3 and opens/closes a flow path in the fuel-gas supply pipe 3.

The first fuel-gas discharge pipe 5 connected to the outlet of the fuel electrode layer 41 is connected to the separator 8 described later at the other end and allows an anode off-gas to pass therethrough from the fuel electrode layer 41 toward the separator 8. The anode off-gas described here refers to a gas discharged from the fuel electrode layer 41 in power generation of the fuel cell stack 40, and contains an unreacted fuel gas, water, water vapor, and the like. The first fuel-gas discharge-pipe shutoff valve 6 is provided on the first fuel-gas discharge pipe 5 and opens/closes a flow path in the first fuel-gas discharge pipe 5. The first pressure sensor 7 is provided on the first fuel-gas discharge pipe 5 on the upstream side of the first fuel-gas discharge-pipe shutoff valve 6 and detects the pressure in the first fuel-gas discharge pipe 5.

The separator 8 is connected to one end of the first fuel-gas discharge pipe 5. The separator 8 separates water from the anode off-gas containing the water permeated from the oxidizer electrode layer 42 to the fuel electrode layer 41. The separator 8 is provided with a drain trap (not illustrated). When the water separated from the anode off-gas and collected reaches a certain amount, the drain trap is opened and allows the water to pass therethrough toward the humidification section 23.

The second fuel-gas discharge pipe 9 connected to the outlet of the separator 8 is connected to the humidification section 23 described later at the other end and allows the anode off-gas to pass therethrough from the separator 8 to the humidification section 23. The second fuel-gas discharge-pipe shutoff valve 10 is provided on the second fuel-gas discharge pipe 9 and opens/closes a flow path in the second fuel-gas discharge pipe 9. For example, the second fuel-gas discharge-pipe shutoff valve 10 is in an open state when the hydrogen concentration in a fuel-gas flow path becomes a certain concentration or lower.

The fuel-gas recycling pipe 11 connected to the second fuel-gas discharge pipe 9 on the upstream side of the second fuel-gas discharge-pipe shutoff valve 10 is connected at the other end to the fuel-gas supply pipe 3 on the downstream side of the fuel-gas supply-pipe shutoff valve 4 and allows the anode off-gas to pass therethrough from the second fuel-gas discharge pipe 9 toward the fuel-gas supply pipe 3. In the fuel-gas recycling pipe 11, at least a part of the anode off-gas containing water vapor generated by electrochemical reaction in the fuel cell stack 40 is recirculated in order to prevent carbon deposition due to shortage of water vapor. The fuel-gas circulation pump 12 is provided on the second fuel-gas discharge pipe 9 on the upstream side of the connecting portion between the second fuel-gas discharge pipe 9 and the fuel-gas recycling pipe 11 and sends out the anode off-gas from the second fuel-gas discharge pipe 9 to the fuel-gas supply pipe 3 via the fuel-gas recycling pipe 11. The fuel-gas recycling-pipe shutoff valve 13 is provided on the fuel-gas recycling pipe 11 and opens/closes a flow path in the fuel-gas recycling pipe 11.

The oxygen-containing-gas supplier 14 is connected to one end of the oxygen-containing-gas supply pipe 15 and supplies an oxygen-containing gas to the oxygen-containing-gas supply pipe 15. For example, the oxygen-containing-gas supplier 14 is an air compressor, and the oxygen-containing gas is air. The oxygen-containing-gas supply pipe 15 connected to the oxygen-containing-gas supplier 14 is connected to the oxidizer electrode layer 42 of the fuel cell stack 40 at the other end and allows the oxygen-containing gas to pass therethrough from the oxygen-containing-gas supplier 14 toward the oxidizer electrode layer 42. The oxygen-containing-gas supply-pipe shutoff valve 16 is provided on the oxygen-containing-gas supply pipe 15 and opens/closes a flow path in the oxygen-containing-gas supply pipe 15.

The first oxygen-containing-gas discharge pipe 17 connected to the outlet of the oxidizer electrode layer 42 is connected to the first heat exchanger 20 described later at the other end and allows a cathode off-gas and water produced at the oxidizer electrode layer 42 in power generation of the fuel cell stack 40 to pass therethrough from the oxidizer electrode layer 42 toward the first heat exchanger 20. The cathode off-gas described here refers to a gas discharged from the oxidizer electrode layer 42 in power generation of the fuel cell stack 40 and contains water, water vapor, and the like. The first oxygen-containing-gas discharge-pipe shutoff valve 18 is provided on the first oxygen-containing-gas discharge pipe 17 and opens/closes a flow path in the first oxygen-containing-gas discharge pipe 17. The second pressure sensor 19 is provided on the first oxygen-containing-gas discharge pipe 17 on the upstream side of the first oxygen-containing-gas discharge-pipe shutoff valve 18 and detects the pressure in the first oxygen-containing-gas discharge pipe 17.

The first heat exchanger 20 is connected to one end of the first oxygen-containing-gas discharge pipe 17. The first heat exchanger 20 recovers heat generated in power generation of the fuel cell stack 40 from the cathode off-gas and condenses water vapor contained in the cathode off-gas.

The second oxygen-containing-gas discharge pipe 21 connected to the outlet of the first heat exchanger 20 is connected to the humidification section 23 at the other end and allows the cathode off-gas to pass therethrough from the first heat exchanger 20 toward the humidification section 23. The second oxygen-containing-gas discharge-pipe shutoff valve 22 is provided on the second oxygen-containing-gas discharge pipe 21 and opens/closes a flow path in the second oxygen-containing-gas discharge pipe 21.

The humidification section 23 is connected to one end of each of the second fuel-gas discharge pipe 9, the second oxygen-containing-gas discharge pipe 21, the cooling-water supply pipe 24 described later, the second cooling-water discharge pipe 30 described later, and the humidifier exhaust pipe 37, and stores therein water produced in the fuel cell stack 40 and a cooling water to be supplied to the cooling layer 43 of the fuel cell stack 40. For example, the humidification section 23 is a water tank.

The cooling-water supply pipe 24 connected to the outlet of the humidification section 23 is connected to the cooling layer 43 of the fuel cell stack 40 at the other end and allows the cooling water to pass therethrough from the humidification section 23 toward the cooling layer 43. The cooling-water supply-pipe shutoff valve 25 is provided on the cooling-water supply pipe 24 and opens/closes a flow path in the cooling-water supply pipe 24.

The first cooling-water discharge pipe 26 connected to the outlet of the cooling layer 43 is connected to the second heat exchanger 29 described later at the other end and allows the cooling water to pass therethrough from the cooling layer 43 toward the second heat exchanger 29. The first cooling-water discharge-pipe shutoff valve 27 is provided on the first cooling-water discharge pipe 26 and opens/closes a flow path in the first cooling-water discharge pipe 26. The third pressure sensor 28 is provided on the first cooling-water discharge pipe 26 on the upstream side of the first cooling-water discharge-pipe shutoff valve 27 and detects the pressure in the first cooling-water discharge pipe 26.

The second heat exchanger 29 is connected to one end of the first cooling-water discharge pipe 26, recovers heat produced in power generation of the fuel cell stack 40, and cools high-temperature water. For example, the second heat exchanger 29 is a radiator and cools the high-temperature water with traveling wind or by a cooling fan.

The second cooling-water discharge pipe 30 connected to the outlet of the second heat exchanger 29 is connected to the humidification section 23 at the other end and allows the cooling water to pass therethrough from the second heat exchanger 29 toward the humidification section 23. The second cooling-water discharge-pipe shutoff valve 31 is provided on the second cooling-water discharge pipe 30 and opens/closes a flow path in the second cooling-water discharge pipe 30.

The first bypass pipe 32 is connected to the separator 8 at one end and to the first cooling-water discharge pipe 26 on the downstream side of the first cooling-water discharge-pipe shutoff valve 27 at the other end and, when water in the fuel cell system 1 is drained, guides water remaining in a fuel-gas flow path from the fuel-gas flow path to a cooling-water flow path. The fuel-gas flow path described here refers to the inside of a pipe, a device, or the like through which the fuel gas can pass, and includes the fuel-gas supply pipe 3, the first fuel-gas discharge pipe 5, the separator 8, the second fuel-gas discharge pipe 9, the fuel-gas recycling pipe 11, the fuel electrode layer 41 of the fuel cell stack 40, and the like in the present embodiment. The cooling-water flow path described here refers to the inside of a pipe, a device, or the like through which water can pass, and includes the humidification section 23, the cooling-water supply pipe 24, the first cooling-water discharge pipe 26, the second heat exchanger 29, the second cooling-water discharge pipe 30, the humidifier drain pipe 38, the cooling layer 43 of the fuel cell stack 40, and the like in the present embodiment. Although the present embodiment exemplifies a configuration in which one end of the first bypass pipe 32 is connected to the separator 8, it suffices that the first bypass pipe 32 is configured to guide at least water remaining in the fuel-gas flow path from the fuel-gas flow path to the cooling-water flow path. The one end of the first bypass pipe 32 may be connected to another fuel-gas flow path without departing from the spirit of the inventions. Further, although the present embodiment exemplifies a configuration in which the other end of the first bypass pipe 32 is connected to the first cooling-water discharge pipe 26 on the downstream side of the first cooling-water discharge-pipe shutoff valve 27, it suffices that the first bypass pipe 32 is configured to guide at least the water remaining in the fuel-gas flow path from the fuel-gas flow path to the cooling-water flow path. The other end of the first bypass pipe 32 may be connected to another cooling-water flow path without departing from the spirit of the inventions. The first bypass-pipe shutoff valve 33 is provided on the first bypass pipe 32 and opens/closes a flow path in the first bypass pipe 32.

The second bypass pipe 34 is connected to the first heat exchanger 20 at one end and to the first cooling-water discharge pipe 26 on the downstream side of the first cooling-water discharge-pipe shutoff valve 27 at the other end and, when water in the fuel cell system 1 is drained, guides water remaining in an oxygen-containing-gas flow path from the oxygen-containing-gas flow path to the cooling-water flow path. The oxygen-containing-gas flow path described here refers to the inside of a pipe, a device, or the like through which the oxygen-containing gas can pass, and includes the oxygen-containing-gas supply pipe 15, the first oxygen-containing-gas discharge pipe 17, the first heat exchanger 20, the second oxygen-containing-gas discharge pipe 21, the oxidizer electrode layer 42 of the fuel cell stack 40, and the like in the present embodiment. Although the present embodiment exemplifies a configuration in which one end of the second bypass pipe 34 is connected to the first heat exchanger 20, it suffices that the second bypass pipe 34 is configured to guide at least the water remaining in the oxygen-containing-gas flow path from the oxygen-containing-gas flow path to the cooling-water flow path. The one end of the second bypass pipe 34 may be connected to another oxygen-containing-gas flow path without departing from the spirit of the inventions. Further, although a configuration is exemplified in which the other end of the second bypass pipe 34 is connected to the first cooling-water discharge pipe 26 on the downstream side of the first cooling-water discharge-pipe shutoff valve 27, it suffices that the second bypass pipe 34 is configured to guide at least the water remaining in the oxygen-containing-gas flow path from the oxygen-containing-gas flow path to the cooling-water flow path. The other end of the second bypass pipe 34 may be connected to another cooling-water flow path without departing from the spirit of the inventions. The second bypass-pipe shutoff valve 35 is provided on the second bypass pipe 34 and opens/closes a flow path in the second bypass pipe 34.

The suction pump 36 is provided in the first cooling-water discharge pipe 26 on the downstream side of the connecting portion between the first cooling-water discharge pipe 26 and the first bypass pipe 32 and the connecting portion between the first cooling-water discharge pipe 26 and the second bypass pipe 34. The suction pump 36 circulates the cooling water in the cooling-water flow path during normal operation of the fuel cell system 1, and sucks out water remaining in the fuel-gas flow path, the oxygen-containing-gas flow path, or the cooling-water flow path from that flow path toward the humidification section 23 or outside when water in the fuel cell system 1 is drained. Although the present embodiment exemplifies a configuration in which the suction pump 36 is provided in the first cooling-water discharge pipe 26 on the downstream side of the connecting portion between the first cooling-water discharge pipe 26 and the first bypass pipe 32 and the connecting portion between the first cooling-water discharge pipe 26 and the second bypass pipe 34, it suffices that the suction pump 36 is arranged at a position at which it can suck out at least water remaining in the fuel-gas flow path and the oxygen-containing-gas flow path via the first bypass pipe 32 and the second bypass pipe 34. The suction pump 36 may be provided in another cooling-water flow path on the downstream side of the connecting portion between the cooling-water flow path and the first bypass pipe 32 and the connecting portion between the cooling-water flow path and the second bypass pipe 34 without departing from the spirit of the inventions.

The humidifier exhaust pipe 37 connected to the humidification section 23 is opened to outside at the other end and allows exhaust in the humidification section 23 to pass therethrough from the humidification section 23 toward outside. The exhaust described here includes an anode off-gas sent from the second fuel-gas discharge pipe 9, a cathode off-gas sent from the second oxygen-containing-gas discharge pipe 21, and the like.

The humidifier drain pipe 38 connected to the cooling-water supply pipe 24 is opened to outside at the other end and allows wastewater in the humidification section 23 to pass therethrough from the humidification section 23 toward outside. The wastewater described here includes water sent from the fuel-gas flow path via the first bypass pipe 32, water sent from the oxygen-containing gas flow path via the second bypass pipe 34, the cooling water circulated in the cooling-water flow path and stored in the humidification section 23, and the like. Although the present embodiment exemplifies a configuration in which one end of the humidifier drain pipe 38 is connected to the cooling-water supply pipe 24, it suffices that the humidifier drain pipe 38 has at least a drain function. The one end of the humidifier drain pipe 38 may be connected to the humidification section 23 or another cooling-water flow path without departing from the spirit of the inventions. The humidifier-drain-pipe shutoff valve 39 is provided on the humidifier drain pipe 38 and opens/closes a flow path in the humidifier drain pipe 38. For example, the humidifier-drain-pipe shutoff valve 39 is in an open state when the humidification section 23 becomes full of water.

The controller 44 is for controlling various operations of the fuel cell system 1 and controls the operating status of the fuel cell stack 40, the open/closed state of each shutoff valve, the operation of the suction pump 36, drainage of the fuel cell system 1, and the like. The illustrations of connections between devices of the fuel cell system 1 are omitted in the drawing, because they make the drawing complicated. Of course, it is assumed that the controller 44 includes not only the function of outputting control instructions but also an input function such as data reading, for example, a function of referring to a measurement result of a pressure gauge or the like.

According to the fuel cell system 1 in FIG. 1, a part of a fuel gas led from the fuel-gas supplier 2 to the fuel electrode layer 41 of the fuel cell stack 40 through the fuel-gas supply pipe 3 is used in power generation in the fuel cell stack 40 to cause electrochemical reaction, so that protons and electrons are generated at the fuel electrode layer 41. Thereafter, the surplus fuel gas that has not been used in power generation is led from the fuel electrode layer 41 to the separator 8 through the first fuel-gas discharge pipe 5 as an anode off-gas. In the separator 8, water permeated from the oxidizer electrode layer 42 to the fuel electrode layer 41 is separated from the anode off-gas. In a case where the second fuel-gas discharge-pipe shutoff valve 10 is in a closed state and the fuel-gas recycling-pipe shutoff valve 13 is in an open state, the anode off-gas exiting from the separator 8 and passing through the second fuel-gas discharge pipe 9 is sent to the fuel-gas supply pipe 3 through the fuel-gas recycling pipe 11 by the operation of the fuel-gas circulation pump 12. When the anode off-gas is led to the fuel electrode layer 41 again, the anode off-gas is reused in power generation. Meanwhile, in a case where the hydrogen concentration in the fuel-gas flow path has become a certain concentration or lower, for example, the second fuel-gas discharge-pipe shutoff valve 10 is in an open state, so that the anode off-gas exiting from the separator 8 and passing through the second fuel-gas discharge pipe 9 is led to the humidification section 23 and discharged to outside through the humidifier exhaust pipe 37. The water separated by the separator 8 is led from a drain trap (not illustrated) on the separator 8 toward the humidification section 23 when a certain amount of water is collected in the drain trap.

Further, a part of an oxygen-containing gas led from the oxygen-containing-gas supplier 14 to the oxidizer electrode layer 42 of the fuel cell stack 40 through the oxygen-containing-gas supply pipe 15 is used in power generation in the fuel cell stack 40 to cause electrochemical reaction, so that water is produced at the oxidizer electrode layer 42. A cathode off-gas and water exiting from the oxidizer electrode layer 42 pass through the first oxygen-containing-gas discharge pipe 17 to be led to the first heat exchanger 20. In the first heat exchanger 20, the cathode off-gas that has been heated to a high temperature by power generation is condensed. When the cathode off-gas exiting from the first heat exchanger 20 and containing water passes through the second oxygen-containing-gas discharge pipe 21 and is led to the humidification section 23, the water is stored in the humidification section 23, and the cathode off-gas is discharged from the humidification section 23 to outside through the humidifier exhaust pipe 37.

Further, in a case where the cooling-water supply-pipe shutoff valve 25 is in an open state and the humidifier-drain-pipe shutoff valve 39 is in a closed state, a part of a cooling water led from the humidification section 23 to the cooling layer 43 of the fuel cell stack 40 through the cooling-water supply pipe 24 is used for internal humidification of the fuel electrode layer 41 and the oxidizer electrode layer 42 and is also used for recovering heat generated in power generation of the fuel cell stack 40. The cooling water exiting from the cooling layer 43 passes through the first cooling-water discharge pipe 26 to be led to the second heat exchanger 29. In the second heat exchanger 29, the cooling water that has been heated to a high temperature by recovering heat generated by power generation is cooled. The cooling water exiting from the second heat exchanger 29 passes through the second cooling-water discharge pipe 30 to be led to the humidification section 23. Meanwhile, in a case where the humidification section 23 is full of water, for example, the humidifier-drain-pipe shutoff valve 39 is in an open state, so that water in the humidification section 23 is drained to outside through the humidifier drain pipe 38 in order to lower the water level in the humidification section 23.

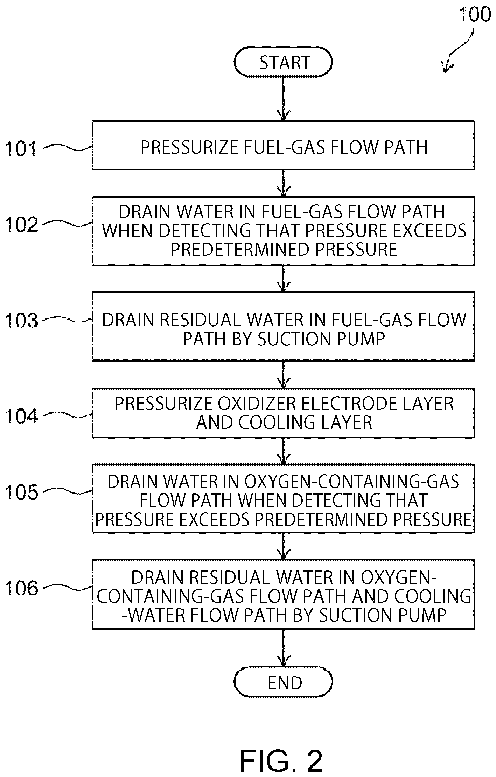

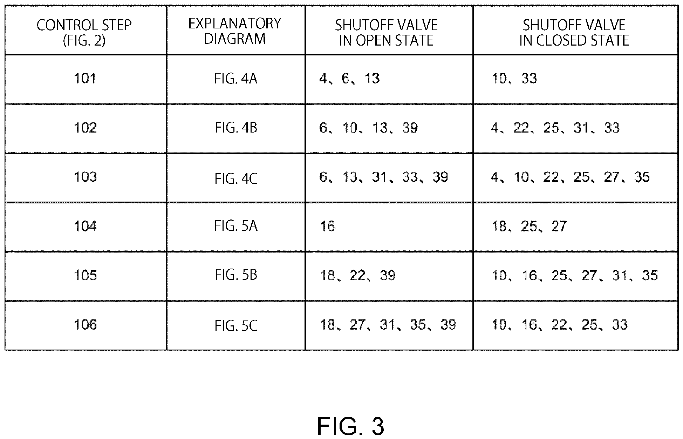

Next, a water flow in a water draining method 100 of the fuel cell system 1 of internal humidification stack type is described with reference to FIGS. 2 to 5C, the method working in a case where there is a risk of freezing of the fuel cell stack 40. The case where there is a risk of freezing of the fuel cell stack 40 can obviously include a case where the controller 44 detects that the outside air temperature is 0 degrees or lower or becomes 0 degrees or lower when power generation of the fuel cell stack 40 is stopped, a case of abnormal stop, and a case of simply stopping power generation of the fuel cell stack 40. At this time, the controller 44 controls opening and closing of predetermined shutoff valves as described in FIG. 3 in each control step of the water draining method 100 of the fuel cell system 1. Although FIG. 3 describes shutoff valves of which at least opening and closing are controlled in each control step, it is preferable that other shutoff valves not described in each control step are in a closed state.

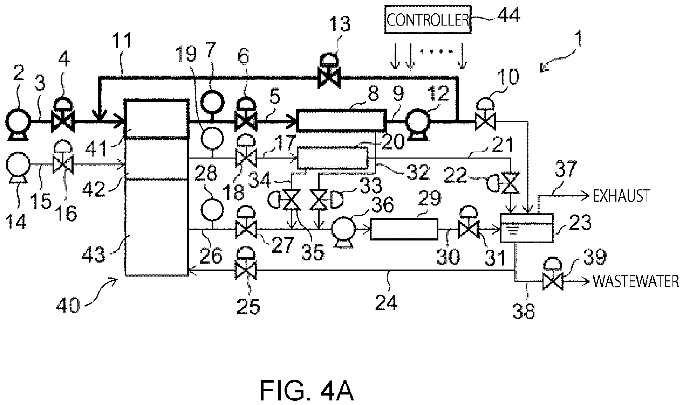

First, a first pressurizing step 101 of pressurizing a fuel-gas flow path is performed (see FIG. 2). At this time, the controller 44 instructs opening and closing of predetermined shutoff valves on the fuel-gas flow path and the first bypass pipe 32. Specifically, the controller 44 instructs in such a manner that the fuel-gas supply-pipe shutoff valve 4, the first fuel-gas discharge-pipe shutoff valve 6, and the fuel-gas recycling-pipe shutoff valve 13 are in an open state, and the second fuel-gas discharge-pipe shutoff valve 10 and the first bypass-pipe shutoff valve 33 are in a closed state (see FIG. 3). As a result, a flow path is formed as indicated with the bold line in FIG. 4A. In this state, by supplying a fuel gas from the fuel-gas supplier 3 to the fuel-gas flow path, the fuel-gas flow path is p ressu rized.

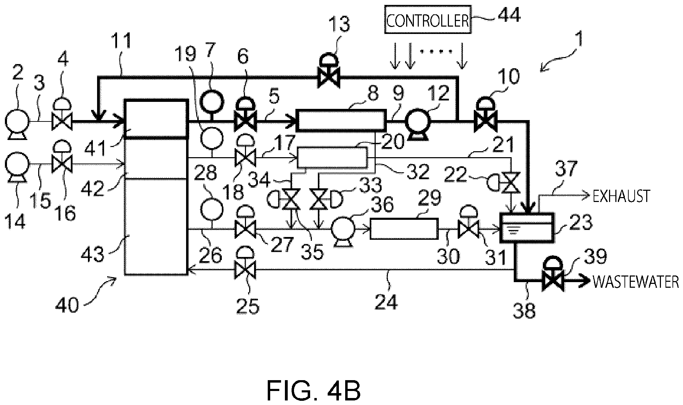

Next, the controller 44 acquires a measurement value of the first pressure sensor 7 and, when detecting that the pressure in the fuel-gas flow path exceeds a predetermined pressure, performs a first draining step 102 of draining water in the fuel-gas flow path (see FIG. 2). The predetermined pressure described here is a pressure value that is lower than the maximum working pressure in the fuel cell system 1 and at which the water in the fuel-gas flow path can be blown out to outside. At this time, the controller 44 instructs opening and closing of predetermined shutoff valves on the fuel-gas flow path, the cooling-water flow path, and the first bypass pipe 32. Specifically, the controller 44 instructs in such a manner that the fuel-gas discharge-pipe shutoff valve 6, the second fuel-gas discharge-pipe shutoff valve 10, the fuel-gas recycling-pipe shutoff valve 13, and the humidifier-drain-pipe shutoff valve 39 are in an open state, and the fuel-gas supply-pipe shutoff valve 4, the second oxygen-containing-gas discharge-pipe shutoff valve 22, the cooling-water supply-pipe shutoff valve 25, the second cooling-water discharge-pipe shutoff valve 31, and the first bypass-pipe shutoff valve 33 are in a closed state (see FIG. 3). As a result, a flow path is formed as indicated with the bold line in FIG. 4B. In this state, by pushing out the water in the fuel-gas flow path at the pressure pressurized in the first pressurizing step 101, the water in the fuel-gas flow path is drained to outside.

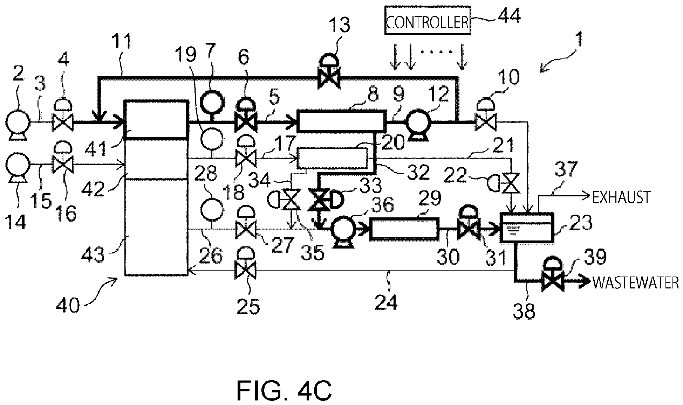

Thereafter, a first suction step 103 of draining residual water in the fuel-gas flow path is performed (see FIG. 2). At this time, the controller 44 instructs opening and closing of predetermined shutoff valves on the fuel-gas flow path, the cooling-water flow path, and the first bypass pipe 32. Specifically, the controller 44 instructs in such a manner that the fuel-gas discharge-pipe shutoff valve 6, the fuel-gas recycling-pipe shutoff valve 13, the second cooling-water discharge-pipe shutoff valve 31, the first bypass-pipe shutoff valve 33, and the humidifier-drain-pipe shutoff valve 39 are in an open state, and the fuel-gas supply-pipe shutoff valve 4, the second fuel-gas discharge-pipe shutoff valve 10, the second oxygen-containing-gas discharge-pipe shutoff valve 22, the cooling-water supply-pipe shutoff valve 25, the first cooling-water discharge-pipe shutoff valve 27, and the second bypass-pipe shutoff valve 35 are in a closed state (see FIG. 3). As a result, a flow path is formed as indicated with the bold line in FIG. 4C. In this state, the suction pump 36 sucks out the water remaining in the fuel-gas flow path via the first bypass pipe 32 under control of the controller 44, thereby draining the residual water in the fuel-gas flow path to outside.

Steps 101 to 103 may be repeated multiple times to sufficiently drain the water in the fuel-gas flow path.

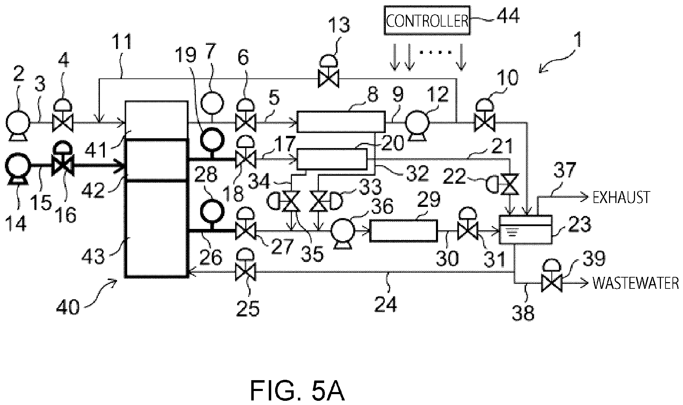

Next, a second pressurizing step 104 of pressurizing the oxidizer electrode layer 42 and the cooling layer 43 is performed (see FIG. 2). At this time, the controller 44 instructs opening and closing of predetermined shutoff valves on an oxygen-containing-gas flow path and the cooling-water flow path. Specifically, the controller 44 instructs in such a manner that the oxygen-containing-gas supply-pipe shutoff valve 16 is in an open state, and the first oxygen-containing-gas discharge-pipe shutoff valve 18, the cooling-water supply-pipe shutoff valve 25, and the first cooling-water discharge-pipe shutoff valve 27 are in a closed state (see FIG. 3). As a result, a flow path is formed as indicated with the bold line in FIG. 5A. In this state, by supplying an oxygen-containing gas from the oxygen-containing-gas supplier 14 to the oxidizer electrode layer 42 and the cooling layer 43, the oxidizer electrode layer 42 and the cooling layer 43 are pressurized. The reason for pressuring the oxidizer electrode layer 42 and the cooling layer 43 in the second pressurizing step whereas the fuel-gas flow path is pressurized in the first pressurizing step is that, since water is produced at the oxidizer electrode layer 42 in power generation and is present more than at the fuel electrode layer 41, it is necessary to intensively drain that water. Although the present embodiment exemplifies supply of the oxygen-containing gas from the oxygen-containing-gas supplier 14, a nitrogen gas cylinder may be provided to supply nitrogen.

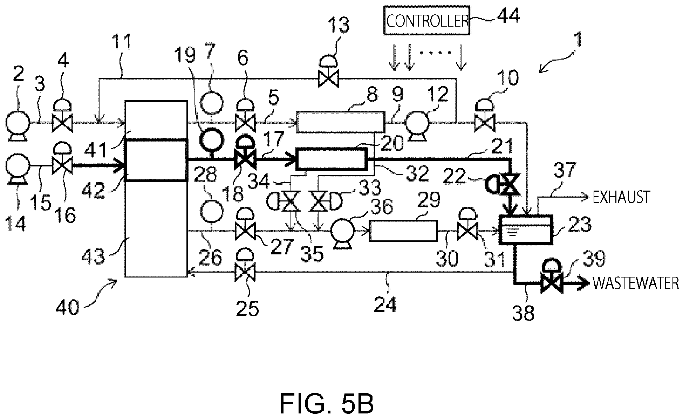

Subsequently, the controller 44 acquires measurement values of the second pressure sensor 19 and the third pressure sensor 28 and, when detecting that a pressure in the oxidizer electrode layer 42 and a pressure in the cooling layer 43 both exceed a predetermined pressure, performs a second draining step 105 of draining water in the oxygen-containing-gas flow path (see FIG. 2). The predetermined pressure described here is a pressure value that is lower than the maximum working pressure in the fuel cell system 1 and at which the water in the oxygen-containing-gas flow path can be blown out to outside. At this time, the controller 44 instructs opening and closing of predetermined shutoff valves on the oxygen-containing-gas flow path, the cooling-water flow path, and the second bypass pipe 34. Specifically, the controller 44 instructs in such a manner that the first oxygen-containing-gas discharge-pipe shutoff valve 18, the second oxygen-containing-gas discharge-pipe shutoff valve 22, and the humidifier-drain-pipe shutoff valve 39 are in an open state, and the second fuel-gas discharge-pipe shutoff valve 10, the oxygen-containing-gas supply-pipe shutoff valve 16, the cooling-water supply-pipe shutoff valve 25, the first cooling-water discharge-pipe shutoff valve 27, the second cooling-water discharge-pipe shutoff valve 31, and the second bypass-pipe shutoff valve 35 are in a closed state (see FIG. 3). As a result, a flow path is formed as indicated with the bold line in FIG. 5B. In this state, by pushing out the water in the oxygen-containing-gas flow path at the pressure pressurized in the second pressurizing step 104, the water in the oxygen-containing-gas flow path is drained to outside.

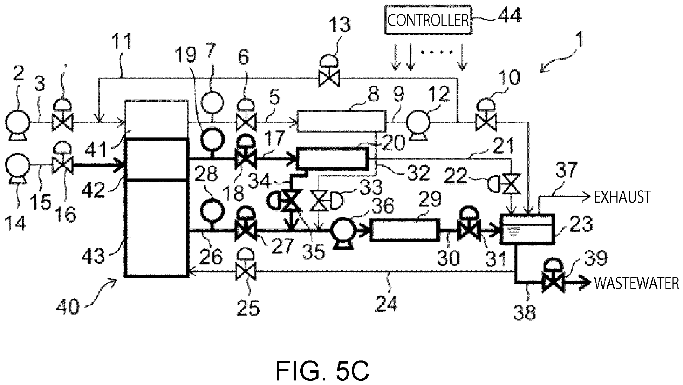

Thereafter, a second suction step 106 of draining residual water in the oxygen-containing-gas flow path and the cooling-water flow path is performed (see FIG. 2). At this time, the controller 44 instructs opening and closing of predetermined shutoff valves on the oxygen-containing-gas flow path, the cooling-water flow path, and the second bypass pipe 34. Specifically, the controller 44 instructs in such a manner that the first oxygen-containing-gas discharge-pipe shutoff valve 18, the first cooling-water discharge-pipe shutoff valve 27, the second cooling-water discharge-pipe shutoff valve 31, the second bypass-pipe shutoff valve 35, and the humidifier-drain-pipe shutoff valve 39 are in an open state, and the second fuel-gas discharge-pipe shutoff valve 10, the oxygen-containing-gas supply-pipe shutoff valve 16, the second oxygen-containing-gas discharge-pipe shutoff valve 22, the cooling-water supply-pipe shutoff valve 25, and the first bypass-pipe shutoff valve 33 are in a closed state (see FIG. 3). As a result, a flow path is formed as indicated with the bold line in FIG. 5C. In this state, the suction pump 36 sucks out the water remaining in the oxygen-containing-gas flow path and the cooling-water flow path via the second bypass pipe 34 under control of the controller 44, thereby draining the residual water in the oxygen-containing-gas flow path and the cooling-water flow path to outside.

Steps 104 to 106 may be repeated multiple times to sufficiently drain the water in the oxygen-containing-gas flow path and the cooling-water flow path.

As described above, according to the fuel cell system 1 of internal humidification stack type and the water draining method 100 of the fuel cell system 1, by newly providing the first bypass pipe 32 connecting a fuel-gas flow path and a cooling-water flow path to each other and the second bypass pipe 34 connecting an oxygen-containing-gas flow path and the cooling-water flow path to each other, the following steps are performed in turn in a case where there is a risk that the fuel cell system 1 is frozen, the steps including the first pressurizing step 101 of controlling predetermined shutoff valves on the fuel-gas flow path and the first bypass pipe 32 and pressurizing the fuel-gas flow path with a fuel gas, the first draining step 102 of controlling predetermined shutoff valves on the fuel-gas flow path, the cooling-water flow path, and the first bypass pipe 32 and pushing out water in the fuel-gas flow path at a pressure pressurized in the first pressurizing step 101, the first suction step 103 of controlling predetermined shutoff valves on the fuel-gas flow path, the cooling-water flow path, and the first bypass pipe 32 and sucking out the water in the fuel-gas flow path by the suction pump 36 via the first bypass pipe 32, the second pressurizing step 104 of controlling predetermined shutoff valves on the oxygen-containing-gas flow path and the cooling-water flow path and pressurizing the oxidizer electrode layer 42 and the cooling layer 43 with an oxygen-containing gas, the second draining step 105 of controlling predetermined shutoff valves on the oxygen-containing-gas flow path, the cooling-water flow path, and the second bypass pipe 34 and pushing out water in the oxygen-containing-gas flow path at a pressure pressurized in the second pressurizing step 104, and the second suction step 106 of controlling predetermined shutoff valves on the fuel-gas flow path, the cooling-water flow path, and the second bypass pipe 34 and sucking out water in the oxygen-containing-gas flow path and the cooling-water flow path by the suction pump 36 via the second bypass pipe 34. Therefore, water is roughly drained in the pressurizing steps and the draining steps, and thereafter residual water is further sucked out and drained in the suction steps. As a result, although the conventional technique has a problem that, even if the oxygen-containing gas is ejected by an air compressor, there remains a possibility that water remains in the fuel cell stack and in the discharge system piping, and therefore the influences of freezing on the fuel cell system cannot be prevented, the present embodiment can drain the water remaining in the fuel cell stack and in the discharge system piping to such a level that the influences of freezing can be prevented. Furthermore, instead of continuing ejection from the air compressor in the conventional technique, the present embodiment adopts a specification of using the air compressor and the suction pump together. Therefore, the total power consumption necessary for discharging the water remaining in the fuel cell stack and in the discharge system piping to outside can be reduced, the amount of the oxygen-containing gas caused to flow into the fuel cell stack by the air compressor can be also reduced, and the electrolyte layer can be prevented from being oxidized.

### (Second embodiment)

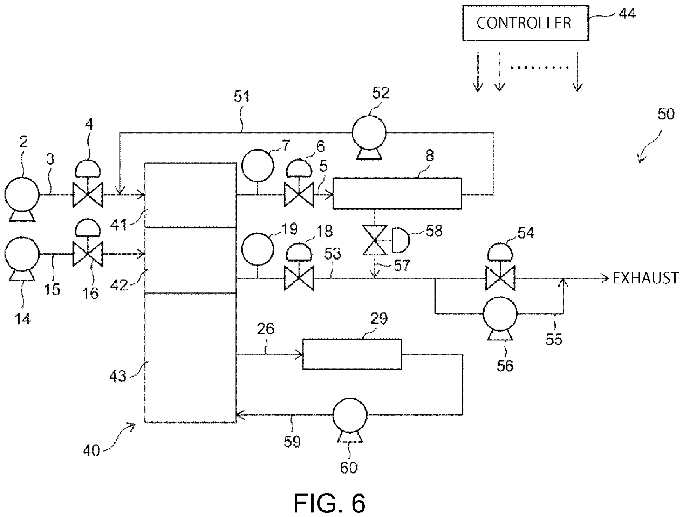

An overall configuration of a fuel cell system 50 of external humidification stack type is described with reference to FIG. 6. Elements different from those of the first embodiment are described below. The remaining elements are considered as being identical to those of the first embodiment and are denoted by like reference signs, and explanations thereof may be omitted. The fuel cell system 50 of external humidification stack type of the present embodiment includes the fuel-gas supplier 2, the fuel-gas supply pipe 3, the fuel-gas supply-pipe shutoff valve 4, the first fuel-gas discharge pipe 5, the first fuel-gas discharge-pipe shutoff valve 6, the first pressure sensor 7, the separator 8, a fuel-gas recycling pipe 51, and a fuel-gas circulation pump 52. Further, the fuel cell system 50 includes the oxygen-containing-gas supplier 14, the oxygen-containing-gas supply pipe 15, the oxygen-containing-gas supply-pipe shutoff valve 16, a first oxygen-containing-gas discharge pipe 53, the first oxygen-containing-gas discharge-pipe shutoff valve 18, the second pressure sensor 19, a first oxygen-containing-gas discharge-pipe shutoff valve 54, a suction pipe 55, a suction pump 56, a bypass pipe 57, and a bypass-pipe shutoff valve 58. Furthermore, the fuel cell system 50 includes the first cooling-water discharge pipe 26, the second heat exchanger 29, a cooling-water supply pipe 59, a circulation pump 60, the fuel cell stack 40, and the controller 44.

The fuel cell stack 40 of the present embodiment is different from that of the first embodiment in that a fuel gas and an oxygen-containing gas humidified by a humidifier (not illustrated) are supplied to the fuel electrode layer 41 and the oxidizer electrode layer 42, that is, external humidification is employed, instead of humidifying the fuel electrode layer 41 and the oxidizer electrode layer 42 by a cooling water supplied to the cooling layer 43, that is, employing internal humidification.

The fuel-gas recycling pipe 51 is connected to the outlet of the separator 8 at one end and to the fuel-gas supply pipe 3 on the downstream side of the fuel-gas supply-pipe shutoff valve 4 at the other end, and allows an anode off-gas to pass therethrough from the separator 8 toward the fuel-gas supply pipe 3. The fuel-gas circulation pump 52 is provided on the fuel-gas recycling pipe 51 and sends out the anode off-gas from the separator 8 to the fuel-gas supply pipe 3.

The first oxygen-containing-gas discharge pipe 53 is connected to the outlet of the oxidizer electrode layer 42 at one end, is opened to outside at the other end, and allows a cathode off-gas to pass therethrough from the oxidizer electrode layer 42 to outside. The first oxygen-containing-gas discharge-pipe shutoff valve 54 is provided on the first oxygen-containing-gas discharge pipe 53 on the downstream side of the first oxygen-containing-gas discharge-pipe shutoff valve 18 and opens/closes a flow path in the first oxygen-containing-gas discharge pipe 53.

The suction pipe 55 is connected to the first oxygen-containing-gas discharge pipe 53 on the downstream side of the first oxygen-containing-gas discharge-pipe shutoff valve 18 and on the upstream side of the first oxygen-containing-gas discharge-pipe shutoff valve 54 at one end, is connected to the first oxygen-containing-gas discharge pipe 53 on the downstream side of the first oxygen-containing-gas discharge-pipe shutoff valve 54 at the other end, and allows water sucked by the suction pump 56 to pass therethrough when water in the fuel cell system 50 is drained. The suction pump 56 is provided on the suction pipe 55 and, when water in the fuel cell system 50 is drained, sucks out water in the fuel-gas flow path or the oxygen-containing-gas flow path to outside.

The bypass pipe 57 is connected to the separator 8 at one end and to the first oxygen-containing-gas discharge pipe 53 on the downstream side of the first oxygen-containing-gas discharge-pipe shutoff valve 18 and on the upstream side of the suction pipe 55 at the other end and, when water in the fuel cell system 50 is drained, guides water in the fuel-gas flow path from the fuel-gas flow path to the oxygen-containing-gas flow path. The fuel-gas flow path described here includes the fuel-gas supply pipe 3, the first fuel-gas discharge pipe 5, the separator 8, the fuel electrode layer 41 of the fuel cell stack 40, the fuel-gas recycling pipe 51, and the like in the present embodiment. The oxygen-containing-gas flow path described here includes the oxygen-containing-gas supply pipe 15, the oxidizer electrode layer 42 of the fuel cell stack 40, the first oxygen-containing-gas discharge pipe 53, the suction pipe 55, and the like in the present embodiment. Although the present embodiment exemplifies a configuration in which one end of the bypass pipe 57 is connected to the separator 8, it suffices that the bypass pipe 57 is configured to guide at least water in the fuel-gas flow path from the fuel-gas flow path to the oxygen-containing-gas flow path. The one end of the bypass pipe 57 may be connected to another fuel-gas flow path without departing from the spirit of the inventions. The bypass-pipe shutoff valve 58 is provided on the bypass pipe 57 and opens/closes a flow path in the bypass pipe 57.

The cooling-water supply pipe 59 is connected to the outlet of the second heat exchanger 29 at one end and to the cooling layer 43 of the fuel cell stack 40 at the other end and allows a cooling water to pass therethrough from the second heat exchanger 29 toward the cooling layer 43. The cooling water described here is not limited to water, and antifreeze may be used. The circulation pump 60 is provided on the cooling-water supply pipe 59 and circulates the cooling water in a cooling-water flow path.

According to the fuel cell system 50 in FIG. 6, a part of a fuel gas led from the fuel-gas supplier 2 to the fuel electrode layer 41 of the fuel cell stack 40 through the fuel-gas supply pipe 3 is used in power generation in the fuel cell stack 40 to cause electrochemical reaction, so that protons and electrons are generated at the fuel electrode layer 41. Thereafter, the surplus fuel gas that has not been used in power generation is led from the fuel electrode layer 41 to the separator 8 through the first fuel-gas discharge pipe 5 as an anode off-gas. In the separator 8, water permeated from the oxidizer electrode layer 42 to the fuel electrode layer 41 is separated from the anode off-gas. The anode off-gas exiting from the separator 8 is sent to the fuel-gas supply pipe 3 through the fuel-gas recycling pipe 51 by the operation of the fuel-gas circulation pump 52 and, when being led to the fuel electrode layer 41 again, is reused in power generation. The water separated by the separator 8 is drained to outside from a drain trap (not illustrated) on the separator 8 when a certain amount of water is collected in the drain trap.

Further, a part of an oxygen-containing gas led from the oxygen-containing-gas supplier 14 to the oxidizer electrode layer 42 of the fuel cell stack 40 through the oxygen-containing-gas supply pipe 15 is used in power generation in the fuel cell stack 40 to cause electrochemical reaction, so that water is produced at the oxidizer electrode layer 42. A cathode off-gas and water exiting from the oxidizer electrode layer 42 pass through the first oxygen-containing-gas discharge pipe 17 and are discharged to outside.

Further, a cooling water led from the cooling-water supply pipe 59 to the cooling layer 43 of the fuel cell stack 40 is used for recovering heat generated in power generation of the fuel cell stack 40. The cooling water exiting from the cooling layer 43 passes through the first cooling-water discharge pipe 26 to be led to the second heat exchanger 29. In the second heat exchanger 29, the cooling water that has been heated to a high temperature by recovering heat generated by power generation is cooled. The cooling water exiting from the second heat exchanger 29 is sent to the cooling layer 43 through the cooling-water supply pipe 59 again by the operation of the circulation pump 60.

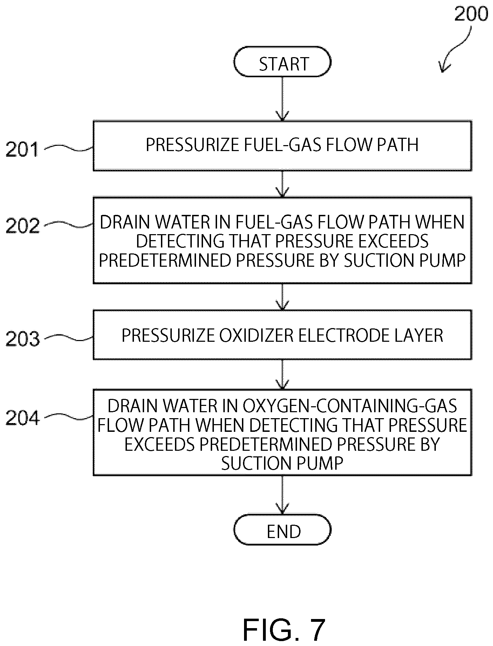

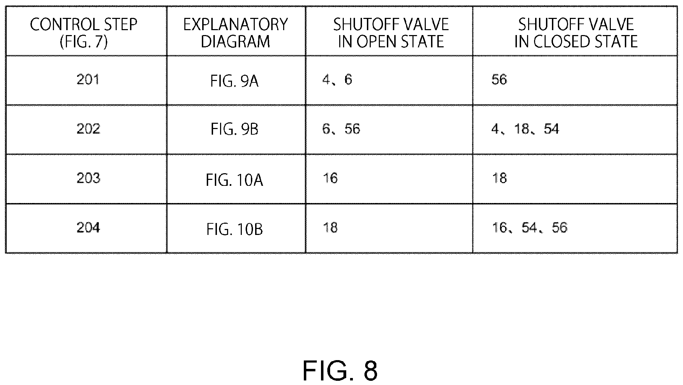

Next, a water flow in a water draining method 200 of the fuel cell system 50 of external humidification stack type is described with reference to FIGS. 7 to 10B, the method working in a case where there is a risk of freezing of the fuel cell stack 40. At this time, the controller 44 controls opening and closing of predetermined shutoff valves as described in FIG. 8 in each control step of the water draining method 200 of the fuel cell system 50. Although FIG. 8 describes shutoff valves of which at least opening and closing are controlled in each control step, it is preferable that other shutoff valves not described in each control step are in a closed state.

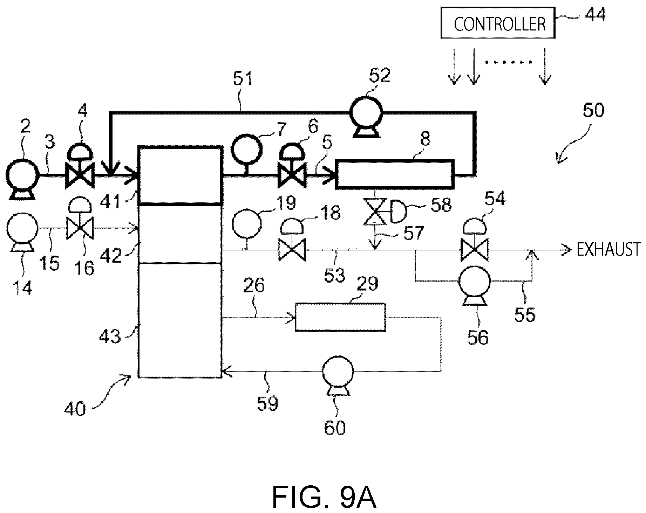

First, a first pressurizing step 201 of pressurizing a fuel-gas flow path is performed (see FIG. 7). At this time, the controller 44 instructs opening and closing of predetermined shutoff valves on the fuel-gas flow path and the bypass pipe 57. Specifically, the controller 44 instructs in such a manner that the fuel-gas supply-pipe shutoff valve 4 and the first fuel-gas discharge-pipe shutoff valve 6 are in an open state, and the bypass-pipe shutoff valve 58 is in a closed state (see FIG. 8). As a result, a flow path is formed as indicated with the bold line in FIG. 9A. In this state, by supplying a fuel gas from the fuel-gas supplier 3 to the fuel-gas flow path, the fuel-gas flow path is pressurized.

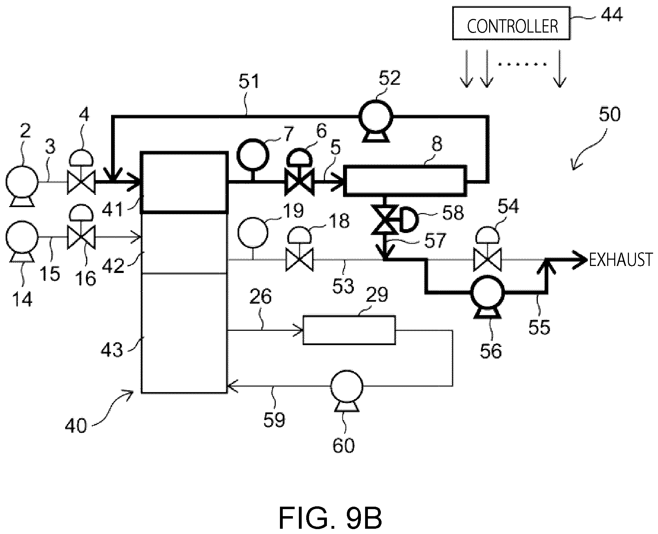

Next, the controller 44 acquires a measurement value of the first pressure sensor 7 and, when detecting that the pressure in the fuel-gas flow path exceeds a predetermined pressure, performs a first suction step 202 of draining water in the fuel-gas flow path (see FIG. 7). The predetermined pressure described here is a pressure value that is lower than the maximum working pressure in the fuel cell system 50 and at which the water in the fuel-gas flow path can be blown out to outside. At this time, the controller 44 instructs opening and closing of predetermined shutoff valves on the fuel-gas flow path, the oxygen-containing-gas flow path, and the bypass pipe 57. Specifically, the controller 44 instructs in such a manner that the fuel-gas discharge-pipe shutoff valve 6 and the bypass-pipe shutoff valve 58 are in an open state, and the fuel-gas supply-pipe shutoff valve 4, the first oxygen-containing-gas discharge-pipe shutoff valve 18, and the first oxygen-containing-gas discharge-pipe shutoff valve 54 are in a closed state (see FIG. 8). As a result, a flow path is formed as indicated with the bold line in FIG. 9B. In this state, the water in the fuel-gas flow path is pushed out at the pressure pressurized in the first pressurizing step 201, and the suction pump 56 sucks out the water in the fuel-gas flow path under control of the controller 44. Accordingly, the water in the fuel-gas flow path is drained to outside.

Steps 201 and 202 may be repeated multiple times to sufficiently drain the water in the fuel-gas flow path.

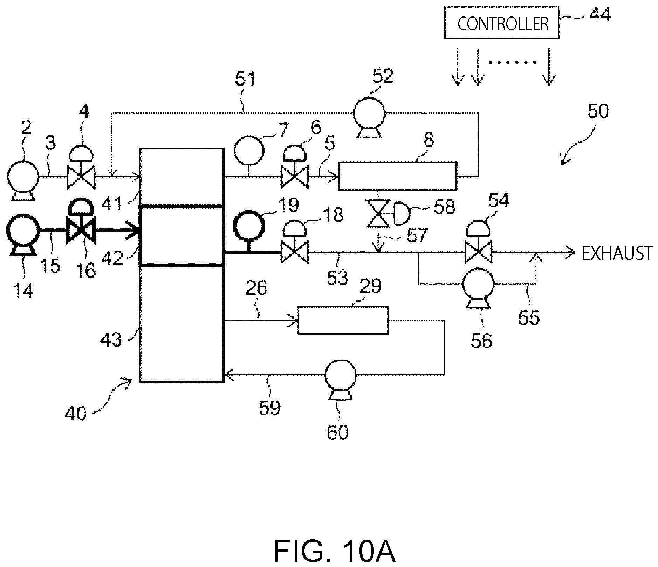

Subsequently, a second pressurizing step 203 of pressurizing the oxidizer electrode layer 42 is performed (see FIG. 7). At this time, the controller 44 instructs opening and closing of predetermined shutoff valves on the oxygen-containing-gas flow path. Specifically, the controller 44 instructs in such a manner that the oxygen-containing-gas supply-pipe shutoff valve 16 is in an open state, and the first oxygen-containing-gas discharge-pipe shutoff valve 18 is in a closed state (see FIG. 8). As a result, a flow path is formed as indicated with the bold line in FIG. 10A. In this state, by supplying the oxygen-containing gas from the oxygen-containing-gas supplier 14 to the oxidizer electrode layer 42, the oxidizer electrode layer 42 is pressurized. The reason for pressuring the oxidizer electrode layer 42 in the second pressurizing step whereas the fuel-gas flow path is pressurized in the first pressurizing step is that, since water is produced at the oxidizer electrode layer 42 in power generation and is present more than at the fuel electrode layer 41, it is necessary to intensively drain that water. Although the present embodiment exemplifies supply of the oxygen-containing gas from the oxygen-containing-gas supplier 14, a nitrogen gas cylinder may be provided to supply nitrogen.

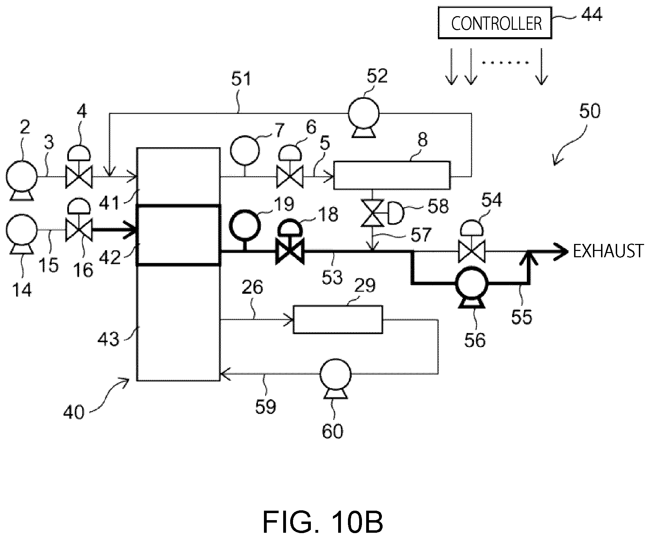

Subsequently, the controller 44 acquires a measurement value of the second pressure sensor 19 and, when detecting that the pressure in the oxidizer electrode layer 42 exceeds a predetermined pressure, performs a second suction step 204 of draining water in the oxygen-containing-gas flow path (see FIG. 7). The predetermined pressure described here is a pressure value that is lower than the maximum working pressure in the fuel cell system 50 and at which the water in the oxygen-containing-gas flow path can be blown out to outside. At this time, the controller 44 instructs opening and closing of predetermined shutoff valves on the oxygen-containing-gas flow path and the bypass pipe 57. Specifically, the controller 44 instructs in such a manner that the first oxygen-containing-gas discharge- pipe shutoff valve 18 is in an open state, and the oxygen-containing-gas supply-pipe shutoff valve 16, the first oxygen-containing-gas discharge-pipe shutoff valve 54, and the bypass-pipe shutoff valve 58 are in a closed state (see FIG. 8). As a result, a flow path is formed as indicated with the bold line in FIG. 10B. In this state, the water in the oxygen-containing-gas flow path is pushed out at the pressure pressurized in the second pressurizing step 203, and the suction pump 56 sucks out the water in the oxygen-containing-gas flow path under control of the controller 44. Accordingly, the water in the oxygen-containing-gas flow path is drained to outside.

Steps 203 and 204 may be repeated multiple times to sufficiently drain the water in the oxygen-containing-gas flow path.

As described above, according to the fuel cell system 50 of external humidification stack type and the water draining method 200 of the fuel cell system 50, by newly providing the suction pipe 55 and the suction pump 56, the following steps are performed in turn in a case where there is a risk that the fuel cell system 50 is frozen, the steps including the first pressurizing step 201 of controlling predetermined shutoff valves on a fuel-gas flow path and the bypass pipe 57 and pressurizing the fuel-gas flow path with a fuel gas, the first suction step 202 of controlling predetermined shutoff valves on the fuel-gas flow path, an oxygen-containing-gas flow path, and the bypass pipe 57 and, along with pushing out water in the fuel-gas flow path at a pressure pressurized in the first pressurizing step 201, sucking out the water in the fuel-gas flow path by the suction pump 56 via the bypass pipe 57, the second pressurizing step 203 of controlling a predetermined shutoff valve on the oxygen-containing-gas flow path and pressurizing the oxidizer electrode layer 42 with an oxygen-containing gas, and the second suction step 204 of controlling predetermined shutoff valves on the oxygen-containing-gas flow path and the bypass pipe 57 and, along with pushing out water in the oxygen-containing-gas flow path at a pressure pressurized in the second pressurizing step 203, sucking out the water in the oxygen-containing-gas flow path by the suction pump 56. As a result, although the conventional technique has a problem that, even if the oxygen-containing gas is ejected by an air compressor, there remains a possibility that water remains in the fuel cell stack and in the discharge system piping, and therefore the influences of freezing on the fuel cell system cannot be prevented, the present embodiment can drain the water remaining in the fuel cell stack and in the discharge system piping to such a level that the influences of freezing can be prevented. Furthermore, instead of continuing ejection from the air compressor in the conventional technique, the present embodiment adopts a specification of using the air compressor and the suction pump together. Therefore, the total power consumption necessary for discharging the water remaining in the fuel cell stack and in the discharge system piping to outside can be reduced, the amount of the oxygen-containing gas caused to flow into the fuel cell stack by the air compressor can also be reduced, and the electrolyte layer can be prevented from being oxidized.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A fuel cell system comprising:
a fuel cell stack including a fuel electrode layer to which a fuel gas is supplied, an oxidizer electrode layer to which an oxygen-containing gas is supplied, and a cooling layer to which a cooling water is supplied;
a fuel-gas flow path configured to allow the fuel gas from the fuel electrode layer of the fuel cell stack to pass therethrough;
an oxygen-containing-gas flow path configured to allow the oxygen-containing gas from the oxidizer electrode layer of the fuel cell stack to pass therethrough;
a cooling-water flow path configured to allow the cooling water from the cooling layer of the fuel cell stack to pass therethrough;
a first bypass pipe configured to guide water in the fuel-gas flow path to the cooling-water flow path; and
a suction pump provided in the oxygen-containing-gas flow path on a downstream side of a connecting portion between the oxygen-containing-gas flow path and the first bypass pipe.

2. The system of Claim 1, further comprising a second bypass pipe configured to guide water in the oxygen-containing-gas flow path to the cooling-water flow path, wherein
the suction pump is provided in the cooling-water flow path on a downstream side of the connecting portion between the cooling-water flow path and the first bypass pipe and a connecting portion between the cooling-water flow path and the second bypass pipe.

3. The system of Claim 2, further comprising a shutoff valve provided on each of pipes forming the fuel-gas flow path, the oxygen-containing-gas flow path, the cooling-water flow path, the first bypass pipe, and the second bypass pipe and configured to open/close a flow path in the each of the pipes.

4. The system of Claim 3, further comprising a controller configured to control operations of the fuel cell stack, the suction pump, and the shutoff valve, wherein
the controller is configured to
instruct opening and closing of predetermined ones of the shutoff valves on the fuel-gas flow path and the first bypass pipe and instruct pressurization of the fuel-gas flow path with the fuel gas,
instruct opening and closing of predetermined ones of the shutoff valves on the fuel-gas flow path, the cooling-water flow path, and the first bypass pipe and instruct pushing out water in the fuel-gas flow path at a pressure obtained by the pressurization,
instruct opening and closing of predetermined ones of the shutoff valves on the fuel-gas flow path, the cooling-water flow path, and the first bypass pipe and instruct the suction pump to suck out water in the fuel-gas flow path via the first bypass pump,
instruct opening and closing of predetermined ones of the shutoff valves on the oxygen-containing-gas flow path and the cooling-water flow path and instruct pressurization of the oxygen-containing-gas flow path and the cooling-water flow path with the oxygen-containing gas,
instruct opening and closing of predetermined ones of the shutoff valves on the oxygen-containing-gas flow path, the cooling-water flow path, and the second bypass pipe and instruct pushing out water in the oxygen-containing-gas flow path at a pressure obtained by the pressurization, and
instruct opening and closing of predetermined ones of the shutoff valves on the fuel-gas flow path, the cooling-water flow path, and the second bypass pipe and instruct the suction pump to suck out water in the oxygen-containing-gas flow path and the cooling-water flow path via the second bypass pipe.

5. The system of Claim 1, further comprising a shutoff valve provided on each of pipes forming the fuel-gas flow path, the oxygen-containing-gas flow path, and the bypass pipe and configured to open/close a flow path in each of the pipes.

6. A water draining method of a fuel cell system that includes:
a fuel cell stack including a fuel electrode layer to which a fuel gas is supplied, an oxidizer electrode layer to which an oxygen-containing gas is supplied, and a cooling layer to which a cooling water is supplied;
a fuel-gas flow path configured to allow the fuel gas from the fuel electrode layer of the fuel cell stack to pass therethrough;
an oxygen-containing-gas flow path configured to allow the oxygen-containing gas from the oxidizer electrode layer of the fuel cell stack to pass therethrough;
a cooling-water flow path configured to allow the cooling water from the cooling layer of the fuel cell stack to pass therethrough;
a first bypass pipe configured to guide water in the fuel-gas flow path to the cooling-water flow path;
a second bypass pipe configured to guide water in the oxygen-containing-gas flow path to the cooling-water flow path;
a suction pump provided in the cooling-water flow path on a downstream side of a connecting portion between the cooling-water flow path and the first bypass pipe and a connecting portion between the cooling-water flow path and the second bypass pipe; and
a shutoff valve provided on each of pipes forming the fuel-gas flow path, the oxygen-containing-gas flow path, the cooling-water flow path, the first bypass pipe, and the second bypass pipe and configured to open/close a flow path in each of the pipes, the method comprising:
a first pressurizing step of controlling predetermined ones of the shutoff valves on the fuel-gas flow path and the first bypass pipe and pressurizing the fuel-gas flow path with the fuel gas;
a first draining step of controlling predetermined ones of the shutoff valves on the fuel-gas flow path, the cooling-water flow path, and the first bypass pipe and pushing out water in the fuel-gas flow path at a pressure obtained by pressurization in the first pressurizing step;
a first suction step of controlling predetermined ones of the shutoff valves on the fuel-gas flow path, the cooling-water flow path, and the first bypass pipe and sucking out water in the fuel-gas flow path via the first bypass pump by the suction pump;
a second pressurizing step of controlling predetermined ones of the shutoff valves on the oxygen-containing-gas flow path and the cooling-water flow path and pressurizing the oxygen-containing-gas flow path and the cooling-water flow path with the oxygen-containing gas;
a second draining step of controlling predetermined ones of the shutoff valves on the oxygen-containing-gas flow path, the cooling-water flow path, and the second bypass pipe and pushing out water in the oxygen-containing-gas flow path at a pressure obtained by pressurization in the second pressurizing step; and
a second suction step of controlling predetermined ones of the shutoff valves on the fuel-gas flow path, the cooling-water flow path, and the second bypass pipe and sucking out water in the oxygen-containing-gas flow path and the cooling-water flow path via the second bypass pipe by the suction pump.

7. The method of Claim 6, wherein
in the first draining step, opening and closing of the predetermined shutoff valves are controlled when it is detected that a pressure in the fuel-gas flow path exceeds a predetermined pressure, and
in the second draining step, opening and closing of the predetermined shutoff valves are controlled when it is detected that a pressure in the oxygen-containing-gas flow path and a pressure in the cooling-water flow path both exceed a predetermined pressure.

8. The method of Claim 7, further comprising a controller configured to control operations of the fuel cell stack, the suction pump, and the shutoff valve, wherein
the controller is configured to
instruct opening and closing of predetermined ones of the shutoff valves on the fuel-gas flow path and the bypass pipe and instruct pressurization of the fuel-gas flow path with the fuel gas,
instruct opening and closing of predetermined ones of the shutoff valves on the fuel-gas flow path, the oxygen-containing-gas flow path, and the bypass pipe and, along with pushing out water in the fuel-gas flow path at a pressure obtained by the pressurizing, instruct the suction pump to suck out water in the fuel-gas flow path via the bypass pipe,
instruct opening and closing of predetermined one of the shutoff valves on the oxygen-containing-gas flow path and instruct pressurization of the oxygen-containing-gas flow path with the oxygen-containing gas, and
instruct opening and closing of predetermined ones of the shutoff valves on the oxygen-containing-gas flow path and the bypass pipe and, along with pushing out water in the oxygen-containing-gas flow path at a pressure obtained by the pressurizing, instruct the suction pump to suck out water in the oxygen-containing-gas flow path.

9. A water draining method of a fuel cell system that includes:
a fuel cell stack including a fuel electrode layer to which a fuel gas is supplied and an oxidizer electrode layer to which an oxygen-containing gas is supplied;
a fuel-gas flow path configured to allow the fuel gas from the fuel electrode layer of the fuel cell stack to pass therethrough;
an oxygen-containing-gas flow path configured to allow the oxygen-containing gas from the oxidizer electrode layer of the fuel cell stack to pass therethrough;
a bypass pipe configured to guide water in the fuel-gas flow path to the oxygen-containing-gas flow path;
a suction pump provided in the oxygen-containing-gas flow path on a downstream side of a connecting portion between the oxygen-containing-gas flow path and the bypass pipe; and
a shutoff valve provided on each of pipes forming the fuel-gas flow path, the oxygen-containing-gas flow path, and the bypass pipe and configured to open/close a flow path in each of the pipes, the method comprising:
a first pressurizing step of controlling predetermined ones of the shutoff valves on the fuel-gas flow path and the bypass pipe and pressurizing the fuel-gas flow path with the fuel gas;
a first suction step of controlling predetermined ones of the shutoff valves on the fuel-gas flow path, the oxygen-containing-gas flow path, and the bypass pipe and, along with pushing out water in the fuel-gas flow path at a pressure obtained by pressurization in the first pressurizing step, sucking out water in the fuel-gas flow path via the bypass pump by the suction pump;
a second pressurizing step of controlling predetermined one of the shutoff valves on the oxygen-containing-gas flow path and pressurizing the oxygen-containing-gas flow path with the oxygen-containing gas; and
a second suction step of controlling predetermined ones of the shutoff valves on the oxygen-containing-gas flow path and the bypass pipe and, along with pushing out water in the oxygen-containing-gas flow path at a pressure obtained by pressurization in the second pressurizing step, sucking out water in the oxygen-containing-gas flow path by the suction pump.

10. The method of Claim 9, wherein
in the first suction step, opening and closing of the predetermined shutoff valves are controlled when it is detected that a pressure in the fuel-gas flow path exceeds a predetermined pressure, and
in the second suction step, opening and closing of the predetermined shutoff valves are controlled when it is detected that a pressure in the oxygen-containing-gas flow path exceeds a predetermined pressure.
